# EUROPÄISCHE PATENTSCHRIFT

(11) **EP 2 547 877 B1**
(45) Veröffentlichungstag und Bekanntmachung des Hinweises auf die Patenterteilung: **10.05.2017**
(21) Anmeldenummer: 11707662.0
(22) Anmeldetag: 08.03.2011
(51) Int. Cl.: B01D 35/027, F01N 13/00, F24H 9/20, F01N 3/20, G01F 23/24

(54) **TANK MIT EINEM SENSOR ZUR BESTIMMUNG DES FÜLLSTANDS**
TANK HAVING A SENSOR FOR DETERMINING THE FILL LEVEL
RÉSERVOIR MUNI D'UN CAPTEUR PERMETTANT DE DÉTERMINER SON NIVEAU DE REMPLISSAGE

(30) Priorität: 11.03.2010 DE 102010011151
(43) Veröffentlichungstag der Anmeldung: 23.01.2013
(73) Patentinhaber: Continental Automotive GmbH, 30165 Hannover (DE)
(72) Erfinder: BAUER, Peter, 53721 Siegburg (DE); HODGSON, Jan, 53840 Troisdorf (DE)
(86) Internationale Anmeldenummer: PCT/EP2011/053493
(87) Internationale Veröffentlichungsnummer: WO 2011/110574

(56) Entgegenhaltungen:
- WO-A2-02/27280
- DE-A1- 19 841 770
- DE-A1- 19 842 484

## Beschreibung

Die Erfindung betrifft einen Tank mit einem Sensor zur Bestimmung des Füllstands im Tank, insbesondere einem Tank für flüssige Harnstoff-Wasser-Lösung in einer mobilen Anwendung.

Insbesondere für mobile Verbrennungskraftmaschinen in Kraftfahrzeugen sind Abgasreinigungsvorrichtungen bekannt, in welche ein Reduktionsmittel zur Reduktion bestimmter Abgasbestandteile zugeführt wird. Beispielsweise können Stickoxidverbindungen (NOx) im Abgas besonders wirkungsvoll beseitigt werden, wenn dem Abgas Ammoniak als Reduktionsmittel zugeführt wird. Typische Reduktionsmittel, wie beispielsweise Ammoniak, sind Gefahrenstoffe und sollten deshalb in Kraftfahrzeugen nicht direkt bevorratet werden. Deshalb wird Reduktionsmittel regelmäßig als Reduktionsmittelvorläufer in einem separaten Tank als zusätzlicher Betriebsstoff im Kraftfahrzeug vorgehalten. Ein typischer Reduktionsmittelvorläufer ist beispielsweise Harnstoff. Dieser wird z. B. in Form einer 32,5 %-igen Harnstoff-Wasser-Lösung im Kraftfahrzeug bevorratet. Eine solche Harnstoff-Wasser-Lösung ist zum Beispiel unter dem Handelsnahmen *"AdBlue"* erhältlich.

Eine solche Harnstoff-Wasser-Lösung friert typischerweise bei Temperaturen von -11 °C ein. Eine Vorrichtung zur Förderung bzw. Dosierung von flüssigem Reduktionsmittel ist dann nicht mehr in der Lage, die Harnstoff-Wasser-Lösung zu fördern. Derartig niedrige Temperaturen können in Kraftfahrzeugen insbesondere in Folge langer Stillstandszeiten auftreten. Es ist wünschenswert, dass zuverlässig bestimmt werden kann, ob in einem Tank für Reduktionsmittel flüssiges oder gefrorenes Reduktionsmittel vorliegt. Nur der Vollständigkeit halber sei an dieser Stelle darauf hingewiesen, dass unter dem Begriff "Reduktionsmittel" auch die Reduktionsmittelvorläufer (wie insbesondere wässriger Harnstoff) verstanden wird.

Darüber hinaus ist der Verbrauch an Reduktionsmittel regelmäßig niedrig. Typischerweise liegt der Verbrauch an Reduktionsmittel bei ca. 0,5 % bis 10 % des Kraftstoffverbrauchs einer Verbrennungskraftmaschine. Es ist daher eine einfache und kostengünstige Sensorik zur Füllstandsbestimmung gewünscht. Ein aufwändiges kontinuierliches Füllstandsbestimmungsverfahren ist regelmäßig nicht erforderlich. Gleichzeitig bestehen allerdings insbesondere an die Ermittlung eines Reservefüllstands hohe Anforderungen, um stets die gewünschte Reinigungswirkung des Abgasbehandlungssystems zu gewährleisten.

Aus der DE 198 41 770 A1 gehen eine Vorrichtung und ein Verfahren zur Füllstandsmessung für Flüssigkeiten (wie auch Harnstofflösung) in einem Behälter hervor. Dort sind zwei Elektrodenpaare vorgesehen, wobei ein Elektrodenpaar als Referenzsensorelement eingesetzt wird, das ständig von der Flüssigkeit bedeckt ist. Ein weiteres Elektrodenpaar erstreckt sich von oben durch den gesamten Behälter hindurch bis zum Boden und gibt in Abhängigkeit eines Füllstands einen bestimmten elektrischen Leitwert an.

Hiervon ausgehend ist es Aufgabe der hier vorliegenden Erfindung, die im Zusammenhang mit dem Stand der Technik geschilderten technischen Probleme zumindest teilweise zu lösen. Es sollen insbesondere ein Reduktionsmitteltank mit einem besonders vorteilhaften Füllstandssensor beschrieben werden.

Diese Aufgaben werden gelöst mit einem Tank gemäß den Merkmalen des Patentanspruchs 1. Weitere vorteilhafte Ausgestaltungen und Anwendungen des Tanks sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und so weitere Ausgestaltungen der Erfindung aufgezeigt werden. Die Beschreibung, insbesondere im Zusammenhang mit den Figuren, führt weitere besonders bevorzugte Ausführungsvarianten an.

Der erfindungsgemäße Tank für ein Reduktionsmittel weist eine Tankwand und einen von der Tankwand zumindest teilweise begrenzten Innenraum auf, wobei an der Tankwand ein Sensor mit einem ersten elektrischen Kontakt und einem zweiten elektrischen Kontakt angeordnet ist, wobei der erste elektrische Kontakt und der zweite elektrische Kontakt mit dem Innenraum in elektrisch leitfähiger Verbindung stehen, die Tankwand von dem Innenraum zu einer Außenseite der Tankwand durchdringen, und in einem ersten Abstand von weniger als 5 cm [Zentimeter] zueinander angeordnet sind. Bevorzugt sind der erste elektrische Kontakt und der zweite elektrische Kontakt in einem ersten Abstand von weniger 3 cm, besonders bevorzugt sogar weniger als 2 cm angeordnet. Das Merkmal, nach dem der erste elektrische Kontakt und der zweite elektrische Kontakt die Tankwand durchdringen, ist insbesondere so zu verstehen, dass der erste elektrische Kontakt und der zweite elektrische Kontakt eine elektrische Verbindung von dem Innenraum des Tanks zu einer Außenseite des Tanks herstellen.

Zumindest der erste elektrische Kontakt und/oder der zweite elektrische Kontakt können von einem metallischen Topf gebildet sein, welcher in dem Tank angeordnet ist. Ein solcher Topf kann beispielsweise ein Gehäuse für eine Dosiervorrichtung sein, die zur Förderung von Reduktionsmittel aus dem Tank hinaus vorgesehen ist. Zumindest der erste elektrische Kontakt und/oder der zweite elektrische Kontakt können zudem mit einer Entnahmeleitung, einer Rücklaufleitung, einer Entnahme oder eine Ableitung für die Dosiervorrichtung gebildet werden. Eine Entnahmeleitung, eine Rücklaufleitung, eine Entnahme und eine Ableitung sind verschiedene Leitungen, die die Dosiervorrichtung zur Förderung von Reduktionsmittel mit dem Innenraum des Tankes verbinden. Für die Funktionsweise des Tanks ist es erforderlich, dass der erste elektrische Kontakt gegenüber dem zweiten elektrischen Kontakt elektrisch isoliert ist, damit elektrische Eigenschaften des Reduktionsmittels im Tank bestimmt werden können.

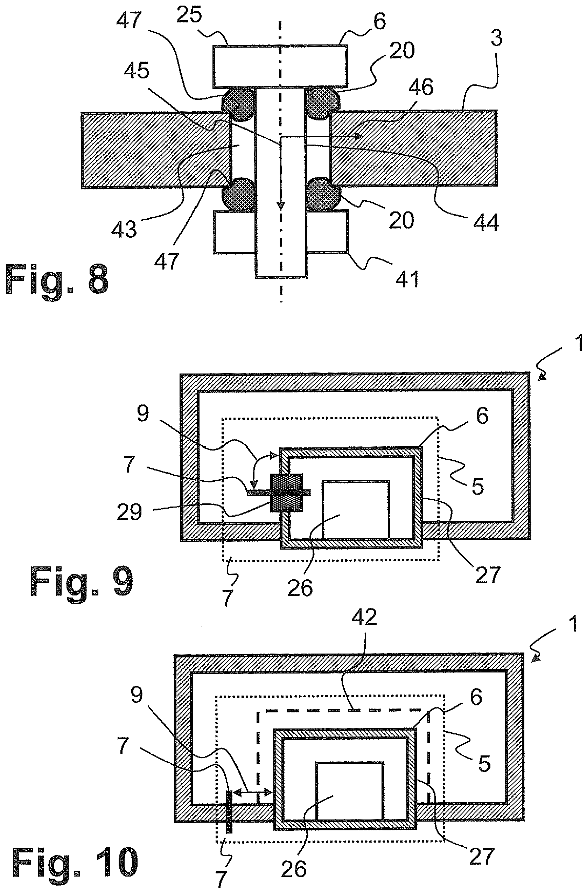

Bei dieser Ausgestaltung des Tanks wird als vorteilhaft angesehen, wenn ein elektrischer Kontakt von einem metallischen Topf gebildet ist und der andere elektrische Kontakt den metallischen Topf durchdringt. Weitere Erläuterungen hierzu werden insbesondere im Zusammenhang mit der Fig. 9 dargestellt.

Ebenso kann es vorteilhaft sein, einen elektrischen Kontakt mit einem metallischen Topf zu bilden, wobei der metallische Topf von einem Filter umgeben ist und der andere elektrische Kontakt außerhalb des Filters angeordnet ist. Weitere Erläuterungen hierzu werden insbesondere im Zusammenhang mit der Fig. 10 dargestellt.

Die Tankwand ist vorzugsweise aus Kunststoff gefertigt. Die elektrischen Kontakte, die gemeinsam den Sensor bilden, sind vorzugsweise in die Tankwand eingegossen. Gegebenenfalls kann zusätzlich zumindest ein Dichtelement mit in die Tankwand eingegossen sein, welches die elektrischen Kontakte gegen die Tankwand abdichtet. Die elektrischen Kontakte sind vorzugsweise als metallische Stifte ausgeführt. Gegebenenfalls können diese metallischen Stifte eine Oberflächenstruktur haben, die die Abdichtung der Tankwand an den metallischen Stiften begünstigt. Gegebenenfalls kann auch eine Nut in den metallischen Stiften ausgebildet sein, in die ein Dichtelement - wie beispielsweise eine O-Ring-Dichtung - hineingreift. Gegebenenfalls können die metallischen Stifte auch eine Ausbuchtung aufweisen, durch die eine verbesserte Abdichtung der Stifte in die Tankwand erreicht wird.

Es ist sowohl möglich, dass die elektrischen Kontakte die Tankwand jeweils einzeln durchdringen. Es ist aber auch möglich, dass die metallischen Stifte in einem gemeinsamen Dichtelement angeordnet sind und dieses Dichtelement als Ganzes in die Tankwand eingelassen ist bzw. die Tankwand durchdringt.

Grundsätzlich können mehrere solcher Sensoren vorgesehen sein, bevorzugt ist jedoch die Bereitstellung nur eines einzelnen Sensors an einem solchen Tank. Mehrere solche Sensoren können beispielsweise in einem Tank vorgesehen sein, um bei niedrigen Füllständen und/oder einer Schräglage des Tanks zuverlässig an zumindest einem der Sensoren eine Messung vornehmen zu können. Bei niedrigen Füllständen kann es auf Grund einer Schräglage des Tanks passieren, dass an einem Sensor kein Reduktionsmittel vorliegt, obwohl bei einer bestimmten im Tank gespeicherten Reduktionsmittelmenge bei waagerechter Ausrichtung des Tanks an dem Sensor eigentlich noch Reduktionsmittel vorliegen würde. Folglich kann so die Fehlerhäufigkeit des Füllstandserfassungssystems reduziert werden.

Soweit hier von "elektrischen Kontakten" die Rede ist, ist der erste elektrische Kontakt und der zweite elektrische Kontakt gemeint, wobei mit dieser Benennung nicht zum Ausdruck gebracht werden soll, dass der erste elektrische Kontakt und der zweite elektrische Kontakt dann immer gleichartig ausgeführt sein müssen; vielmehr soll damit zum Ausdruck gebracht werden, dass zumindest einer der Kontakte so ausgestaltet sein kann. Entsprechendes gilt hier für andere Verallgemeinerungen, wie z. B. zu Stiften, Dichtungen, etc.

Eine besonders bevorzugte Ausgestaltung des Tanks liegt vor, wenn der Sensor an einem Tankboden angeordnet ist. Mit dem oben erläuterten Sensor kann ein Füllstand im Tank bestimmt werden. Insbesondere ist es möglich, einen Reservefüllstand zu bestimmen, weil mit Hilfe einer Messung zwischen den beiden elektrischen Kontakten eine diskrete Füllstandsbestimmung möglich ist. Hierfür wird eine Spannung an den elektrischen Kontakten angelegt und ein elektrische Widerstand (bzw. ein Leitwert = Kehrwert des Widerstands) zwischen den elektrischen Kontakten bestimmt. In Abhängigkeit von diesem Messwert kann ein Rückschluss darauf geschlossen werden, ob und/oder wie viel Reduktionsmittel in dem ersten Abstand zwischen den beiden elektrischen Kontakten des Sensors vorliegt und/oder welchen Aggregatszustand (z. B. flüssig oder gefroren) das Reduktionsmittel hat.

Der Reservefüllstand im Tank wird vorzugsweise in der Nähe des Tankbodens bestimmt, weil in der Nähe des Bodens beide elektrischen Kontakte auf einer gleichen Höhe angeordnet sein können. Außerdem ermöglicht eine Anordnung in der Nähe des Tankbodens eine besonders vorteilhafte Bestimmung eines Restvolumens. Ein Restvolumen stellt nämlich regelmäßig nur eine flächige Bedeckung des Tankbodens dar. Auch kann ein im Tankboden angeordneter Sensor in der Mitte des Tankbodens angeordnet sein. Hierdurch wird der Sensor unempfindlicher gegenüber Schwappbewegungen im Tank und/oder gegenüber einer möglichen Schräglage des Tanks, weil Schwappbewegungen und/oder eine Schräglage eine (besonders stark ausgeprägte) Veränderung des Füllstandes gerade entfernt von der Mitte - am Rand nahe der seitlichen Tankwände - verursachen. Darüber hinaus sind Tanks in Kraftfahrzeugen gegebenenfalls so eingebaut, dass ein Zugang zum Tank nur von unten her möglich ist. Deshalb ist der Sensor z. B. für Wartungsarbeiten besonders gut zugänglich, wenn er im Tankboden angeordnet ist.

Besonders bevorzugt ist, dass die elektrischen Kontakte für eine erste Länge von maximal 5 cm [Zentimeter], vorzugsweise zwischen 0,2 cm und 2 cm, besonders bevorzugt zwischen 0,5 cm und 1 cm, aus dem Tankboden in den Tankinnenraum hineinragen. Im Bereich dieser ersten Länge sind die elektrischen Kontakte vorzugsweise blank, das heißt insbesondere nicht elektrisch isoliert. Folglich kann ein elektrischer Strom von den elektrischen Kontakten in das Reduktionsmittel über die gesamte erste Länge hinweg übertreten.

In einer weiteren vorteilhaften Ausgestaltung kann der Sensor auch an einer Tankwand angeordnet sein. Es ist insbesondere auch möglich mehrere Sensoren, beispielsweise zwischen zwei Sensoren und zehn Sensoren, auf einer bestimmten Höhe über einen Umfang des Tanks zu verteilen. So kann durch diese Mehrzahl von Sensoren eine Überwachung des Tanks erfolgen, wobei auch bei Schräglage und bei Schwappbewegungen im Tank zumindest einer der Sensoren für eine repräsentative Messung geeignet ist.

Die von den einzelnen Sensoren ermittelten Füllstandssignale können in einer geeigneten Steuerung ausgewertet werden, um zu einem korrigierten Füllstandssignal zu gelangen. Beispielsweise kann ein Mittelwert aus den einzelnen Füllstandssignalen gebildet werden, um zu bestimmen, ob eine zu überwachende Reservehöhe unterschritten ist oder nicht. In einer weiteren Ausführungsvariante kann auch unterschieden werden, ob eine Reservehöhe unterschritten ist oder nicht, indem die Anzahl der Sensoren, an denen Reduktionsmittel vorliegt, mit der Anzahl aller vorhandenen Sensoren ins Verhältnis gesetzt wird. Wenn z. B. mehr als die Hälfte der Sensoren meldet, dass die Reservehöhe unterschritten ist, kann die Reservehöhe als unterschritten festgesetzt werden. Auch eine statistische Auswertung der Füllstandssignale der Vielzahl von Sensoren, beispielsweise mit Hilfe einer Hauptkomponentenanalyse, ist möglich.

In einer weiteren vorteilhaften Ausgestaltung ist im Bereich der elektrischen Kontakte ein Absatz mit einer Reservehöhe angeordnet. Dieser Absatz isoliert die elektrischen Kontakte bis hin zur Reservehöhe. Auf diese Art und Weise wird bei im Tankboden angeordneten elektrischen Kontakten eine Reservefüllstandsmenge präzise definiert.

Weiterhin vorteilhaft ist der Tank, wenn der Tank eine Heizung aufweist, und die Heizung in einem Abstand von weniger als 50 cm [Zentimeter] zum Sensor angeordnet ist. Bevorzugt beträgt der zweite Abstand weniger als 20 cm und besonders bevorzugt weniger als 10 cm. Die Heizung ist hierfür insbesondere in der Nähe des Tankbodens angeordnet. Bevorzugt handelt es sich bei dieser Heizung um eine regelbare, elektrische Heizung (z. B. aufweisend wenigstens ein Element aus der Gruppe Heizdraht, Heizfolie, PTC-Element, Kühlwasserheizung). Bei einer Kühlwasserheizung wird vorzugsweise eine Heizspirale durch den Tank geführt, durch welche das von der Verbrennungskraftmaschine erhitzte Kühlwasser fliest und Wärmeenergie an das Reduktionsmittel im Tank abgibt.

Wenn im Tank das Reduktionsmittel vollständig eingefroren ist, bildet sich beim Betrieb einer Heizung in der Nähe des Tankbodens ein Hohlraum im gefrorenen Reduktionsmittel (so genannte "Eishöhle"), in welchem (teilweise) flüssiges Reduktionsmittel vorliegt. Durch einen in einem definierten zweiten Abstand zu der Heizung angeordneten Sensor, welcher zwei elektrische Kontakte aufweist, kann die Größe dieser Eishöhle bestimmt werden. Zunächst kann ein Sensor aus zwei elektrischen Kontakten über eine Leitwertmessung bestimmen, ob flüssiges Reduktionsmittel oder gefrorenes Reduktionsmittel am Sensor vorliegt. Darüber hinaus kann hieraus auf eine Temperaturverteilung im Tank geschlossen werden. Zur Bestimmung einer Temperaturverteilung im Tank kann zusätzlich die durch die Heizung in den Tank eingebrachte Energie berücksichtigt werden.

Darüber hinaus wird vorgeschlagen, dass zumindest an einem elektrischen Kontakt an der Außenseite der Tankwand ein Temperatursensor angebracht ist. Elektrisch leitfähige Kontakte weisen aufgrund ihrer eigenen elektrischen Leitfähigkeit regelmäßig auch eine gute Wärmeleitfähigkeit auf. Die vorzugsweise aus Kunststoff hergestellte Tankwand hingegen hat eine schlechte Wärmeleitfähigkeit. Die elektrischen Kontakte stellen somit eine thermische Brücke durch die Tankwand dar. Dies kann genutzt werden, um einen Temperatursensor außen an einer Tankwand anzubringen und mit diesem Temperatursensor über einen der beiden elektrischen Kontakte eine Temperatur auf der Innenseite der Tankwand bzw. im Innenraum des Tanks zu bestimmen. Durch einen derartigen Sensor werden die Möglichkeiten zur Bestimmung einer Temperaturverteilung im Tank weiter verbessert.

Nachfolgend wird noch ein vorteilhaftes Verfahren zum Betrieb eines Tanks, der einen Sensor mit einem ersten elektrischen Kontakt und einem zweiten elektrischen Kontakt aufweist, vorgeschlagen, welches zumindest die folgenden Schritte umfasst:
a.1) Festlegen eines Leitwertes für flüssiges Reduktionsmittel;
a.2) Festlegen eines Leitwertes für gefrorenes Reduktionsmittel;
a.3) Festlegen eines Leitwertes für Luft;
b) Anlegen einer Spannung zwischen dem ersten elektrischen Kontakt und dem zweiten elektrischen Kontakt;
c) Feststellen eines Leitwerts zwischen dem ersten elektrischen Kontakt und dem zweiten elektrischen Kontakt;
d) Vergleichen des in Schritt c) festgestellten Leitwerts mit den in den Schritten a.1) bis a.3) festgelegten Leitwerten, und ermitteln, ob flüssiges Reduktionsmittel, gefrorenes Reduktionsmittel oder Luft vorliegt.

Zunächst sei hier darauf hingewiesen, dass hier stets elektrische Größen angesprochen werden (Leitwert, Spannung, Kontakt, Widerstand...). Weiter ist anzumerken, dass die Schritte a.1), a.2) und/oder a.3) nicht bei jedem Durchgang einer Ermittlung des Füllstands und/oder des Aggregatzustands durchgeführt werden müssen, sondern ggf. nur einmalig. Dann können die entsprechenden Leitwerte als Richtwerte bzw. Toleranzbereich (dauerhaft) gespeichert werden und für die aktuell in Schritt c) gemessenen Leitwerte in Schritt d) als Referenz herangezogen werden. Folglich können die Leitwerte aus den Schritten a.1), a.2) und a.3) auch als Referenz-Leitwerte bezeichnet werden. Die Leitwerte von flüssigem Reduktionsmittel und gefrorenem Reduktionsmittel sind regelmäßig derart unterschiedlich, dass durch eine Bestimmung des Leitwerts darauf geschlossen werden kann, ob flüssiges Reduktionsmittel oder gefrorenes Reduktionsmittel vorliegt. Luft stellt gegenüber Reduktionsmittel einen sehr guten elektrischen Isolator dar, so dass anhand einer Leitwertbestimmung zwischen den beiden elektrischen Kontakten auch Luft erkannt werden kann. Der Leitwert von gefrorenem Reduktionsmittel und der Leitwert von Luft sind ähnlich.

Als Referenz für den Leitwert von flüssigem Reduktionsmittel kann ein Leitwert verwendet werden, der zu einem früheren Zeitpunkt gemessen wurde. Zu diesem Zeitpunkt sollte im Tank mit Sicherheit flüssiges Reduktionsmittel vorgelegen haben. Ob dies der Fall ist, kann mit einem Temperatursensor bestimmt werden. Wenn mit einem Temperatursensor, der an oder im Tank oder an oder in einer Dosiereinheit für Reduktionsmittel positioniert ist, eine Temperatur oberhalb einer festgelegten Schwelltemperatur gemessen wurde, kann mit Sicherheit davon ausgegangen werden, dass im Tank flüssiges Reduktionsmittel vorliegt.

An der Außenseite der Tankwand kann zudem ein angespritzter oder abgegossener Schutzrahmen angebracht sein, durch welchen der erste elektrische Kontakt und der zweite elektrische Kontakt geschützt werden. Der Schutzrahmen umschließt beispielsweise die elektrischen Kontakte und verhindert somit dauerhaft deren Beschädigung. Dieser Schutzrahmen kann bei der Herstellung des Tank direkt mit vorgesehen werden. Der Schutzrahmen ist deshalb bevorzugt an den Tank angespritzt oder angegossen. Der Schutzrahmen kann auch einen Stecker bilden. Ein Kabel mit einem entsprechenden Anschlussstecker kann dann unmittelbar an den ersten elektrischen Kontakt und an den zweiten elektrischen Kontakt angeschlossen werden. Der Schutzrahmen gibt der Verbindung zwischen dem Tank und dem Anschlussstecker dann auch mechanische Stabilität.

Bei dem Verfahren kann in Schritt b) an den ersten elektrischen Kontakt und an den zweiten elektrischen Kontakt eine Wechselspannung angelegt werden, die zwischen einem positiven Spannungswert und einem negativen Spannungswert wechselt. Vorzugsweise ist die Wechselspannung rechteckförmig. Weiterhin bevorzugt ist die Wechselspannung symmetrisch. Hiermit ist gemeint, dass der negative Spannungsanteil und der positive Spannungsanteil sich in Form und Betrag entsprechen. So kann verhindert werden, dass sich auf einem der beiden Kontakte in Folge von Elektrolyse Ablagerungen bilden.

Wenn der Tank eine Heizung aufweist, kann das Verfahren noch um folgende Schritte erweitert werden:
e.1) Aktivieren der Heizung, wenn in Schritt d) festgestellt wurde, dass gefrorenes Reduktionsmittel vorliegt;
e.2) Deaktivieren der Heizung, wenn in Schritt d) festgestellt wurde, dass Luft vorliegt.

Wenn rund um eine Heizung im Tank eine Eishöhle im gefrorenen Reduktionsmittel gebildet ist, sollte flüssiges Reduktionsmittel in dieser Eishöhle vorliegen, damit die Wärme von der Heizung hin zum verbliebenen gefrorenen Reduktionsmittel transportiert werden kann. Luft in der Eishöhle stellt dagegen einen thermischen Isolator dar. Wenn keine Verbindung aus flüssigem Reduktionsmittel zwischen der Heizung und dem verbliebenen gefrorenen Reduktionsmittel in der Eishöhle vorliegt, ist ein weiterer Betrieb der Heizung regelmäßig nicht sinnvoll, weil die von der Heizung abgegebene Wärmeenergie nicht mehr effizient zum gefrorenen Reduktionsmittel gelangen kann. Bei einer PTC-Heizung (PTC: *positive temperature coefficient*) kann eine derartige Situation festgestellt werden, indem die Stromaufnahme der Heizung überwacht wird. Wenn die Heizung bereits kurz nach dem Einschalten eine verringerte Stromaufnahme hat, liegt eine Eishöhle vor. Bei einer Widerstandsheizung kann eine derartige Situation festgestellt werden, in dem die Stromaufnahme mit der Heizspannung in ein Verhältnis gesetzt wird. Ist dieses Verhältnis stark verringert liegt eine Eishöhle vor. Aus diesem Grunde ist es sinnvoll, die Heizung zu deaktivieren, wenn in einer Eishöhle eine isolierende Luftschicht festgestellt wurde. In einer weiteren Verfahrensführung kann die Heizung auch mit einer reduzierten Leistung betrieben werden, wenn Luft im Tank vorliegt.

Wenn am Sensor noch gefrorenes Reduktionsmittel vorliegt, ist es hier bei einer entsprechenden Ausgestaltung des Tanks unerheblich, ob in unmittelbarer Umgebung zur Heizung eine Eishöhle existiert, die mit Reduktionsmittel oder mit Luft gefüllt ist, weil der zweite Abstand zwischen der Heizung und dem Sensor so gewählt ist, dass eine gegebenenfalls zwischen dem Sensor und der Heizung vorliegende Eishöhle so klein ist, dass trotz der Eishöhle ein ausreichender Wärmetransport von der (flächigen) Heizung in das gefrorene Reduktionsmittel erfolgen kann. Gerade bei sehr kleinen Eishöhlen reicht die Wärmetransportfähigkeit der Luft von der Heizung zum gefrorenen Reduktionsmittel aus, so dass die Heizung weiter aktiviert bleiben kann.

Die für das Verfahren geschilderten Vorteile und besonderen Ausgestaltungen sind auf den erfindungsgemäßen Tank und anwendbar und übertragbar.

Besonders bevorzugt findet die Erfindung Anwendung bei einem Kraftfahrzeug, aufweisend eine Verbrennungskraftmaschine mit einer Abgasbehandlungsvorrichtung, die eine Dosiervorrichtung für Reduktionsmittel aufweist, wobei die Dosiervorrichtung einen erfindungsgemäßen Tank und aufweist. Darüber hinaus kann das Kraftfahrzeug eine Steuerung aufweisen, die zur Durchführung des Verfahrens eingerichtet ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: einen erfindungsgemäßen Tank für Reduktionsmittel,
- Fig. 2:: eine erste Ausführungsvariante für elektrische Kontakte,
- Fig. 3:: eine zweite Ausführungsvariante für elektrische Kontakte,
- Fig. 4:: eine dritte Ausführungsvariante für elektrische Kontakte,
- Fig. 5:: eine vierte Ausführungsvariante für elektrische Kontakte,
- Fig. 6:: einen Tank aufweisend einen Temperatursensor,
- Fig. 7:: ein Kraftfahrzeug mit einem Tank,
- Fig. 8:: eine fünfte Ausführungsvariante für elektrische Kontakte,
- Fig. 9: einen Tank mit einer sechsten Ausführungsvariante für elektrische Kontakte, und
- Fig. 10: einen Tank mit einer siebten Ausführungsvariante für elektrische Kontakte.

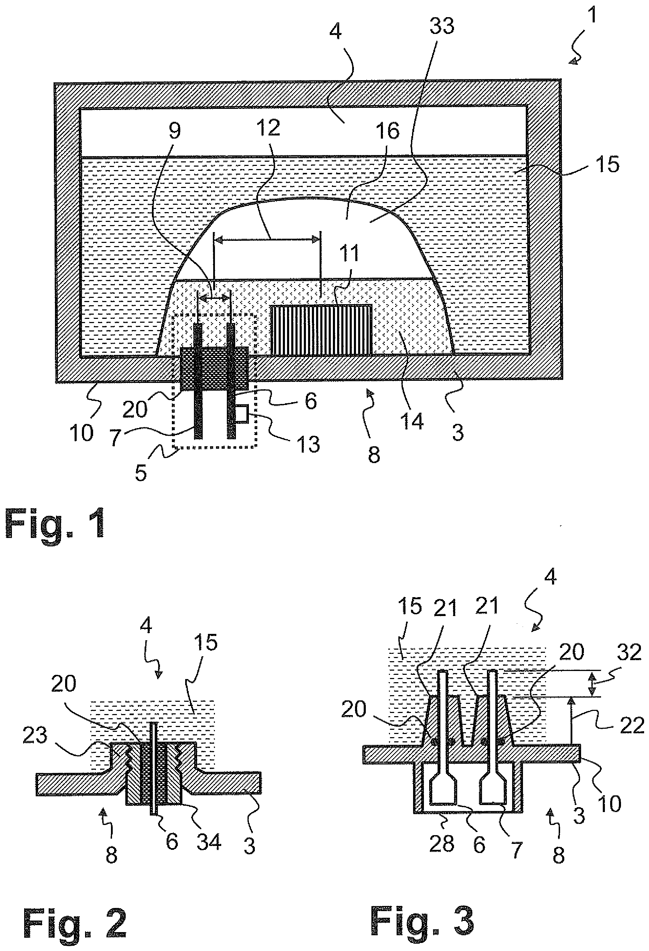

In Fig. 1 ist ein Tank 1 dargestellt. Dieser Tank 1 weist eine Tankwand 3 auf, die einen Innenraum 4 begrenzt. In dem Tank 1 liegt gefrorenes Reduktionsmittel 15 vor, in welchem eine Eishöhle 33 gebildet ist. Die Eishöhle 33 ist teilweise mit Luft 16 und teilweise mit flüssigem Reduktionsmittel 14 (hier insbesondere einer Harnstoff-Wasser-Lösung) gefüllt. Die Eishöhle 33 ist rund um eine (elektrisch regelbare, flächige) Heizung 11 ausgebildet. Die Heizung 11 ist im Bereich des Tankbodens 10 an der Tankwand 3 angeordnet. In einem zweiten Abstand 12 zu der Heizung 11 befindet sich ein Sensor 5. Der Sensor 5 ist dort ebenfalls in der Tankwand 3, nämlich dem Tankboden 10, angeordnet. Der Sensor 5 weist einen ersten elektrischen Kontakt 6 und einen zweiten elektrischen Kontakt 7 auf. Der erste elektrische Kontakt 6 und der zweite elektrische Kontakt 7 sind in einem ersten Abstand 9 zueinander angeordnet und mit einer Dichtung 20 durch die Tankwand 3 des Tanks 1 hindurch geführt. An dem ersten elektrischen Kontakt 6 ist ein Temperatursensor 13 befestigt, mit welchem von einer Außenseite 8 des Tanks 1 die Temperatur im Innenraum 4 des Tanks 1 bzw. die Temperatur des Reduktionsmittels detektiert werden kann.

In Fig. 2 ist ein Beispiel dafür gezeigt, wie ein elektrischer Kontakt eine Tankwand 3 durchdringen kann. Die Tankwand 3 weist eine Einstülpung 23 auf, in welche eine Gewindehülse 34 eingebracht ist. In der Gewindehülse 34 ist der erste elektrische Kontakt 6 mit einer Dichtung 20 angeordnet. Der Innenraum 4 eines Tanks, der beispielsweise mit gefrorenem Reduktionsmittel 15 gefüllt ist, ist mit der Dichtung 20 gegenüber einer Außenseite 8 abgedichtet.

In Fig. 3 ist ein weiteres Beispiel dafür gezeigt, wie ein erster elektrischer Kontakt 6 und ein zweiter elektrischer Kontakt 7 eine Tankwand 3 durchdringen können. Die Tankwand 3 wird hier im Bereich des Tankbodens 10 durchdrungen. Der erste elektrische Kontakt 6 und der zweite elektrische Kontakt 7 sind mit Hilfe von Dichtungen 20 in die Tankwand 3 eingelassen. Der mit Reduktionsmittel 15 gefüllte Innenraum 4 eines Tanks 1 wird so gegenüber einer Außenseite 8 abgedichtet. An der Außenseite 8 ist an der Tankwand 3 ein Schutzrahmen 28 angebracht, durch welchen der erste elektrische Kontakt 6 und der zweite elektrische Kontakt 7 geschützt werden. Dieser Schutzrahmen 28 kann bei der Herstellung des Tank 1 direkt mit vorgesehen werden. Der Schutzrahmen 28 kann beispielsweise an den Tank 1 angespritzt oder angegossen sein. Im Innenraum 4 ist im Bereich des ersten elektrischen Kontakts 6 und des zweiten elektrischen Kontakts 7 an der Tankwand 3 für den ersten elektrischen Kontakt 6 und den zweiten elektrischen Kontakt 7 jeweils ein Absatz 21 vorgesehen. Durch die Absätze 21 wird eine Reservehöhe 22 im Tank definiert (die Reservehöhe stellt den Füllstand im Tank dar, wenn nur noch das Reservevolumen an flüssigem Reduktionsmittel vorliegt). Der erste elektrische Kontakt 6 und der zweite elektrische Kontakt 7 ragen jeweils für eine erste Länge 32 aus den Absätzen 21 heraus. So wird ein sicherer elektrisch leitfähiger Kontakt zwischen dem im Innenraum 4 vorliegenden Reduktionsmittel und dem ersten elektrischen Kontakt 6 bzw. dem zweiten elektrischen Kontakt 7 gewährleistet. Die Anordnung gemäß der Fig. 3 eignet sich insbesondere bei einer Anordnung des Sensors im Tankboden 10.

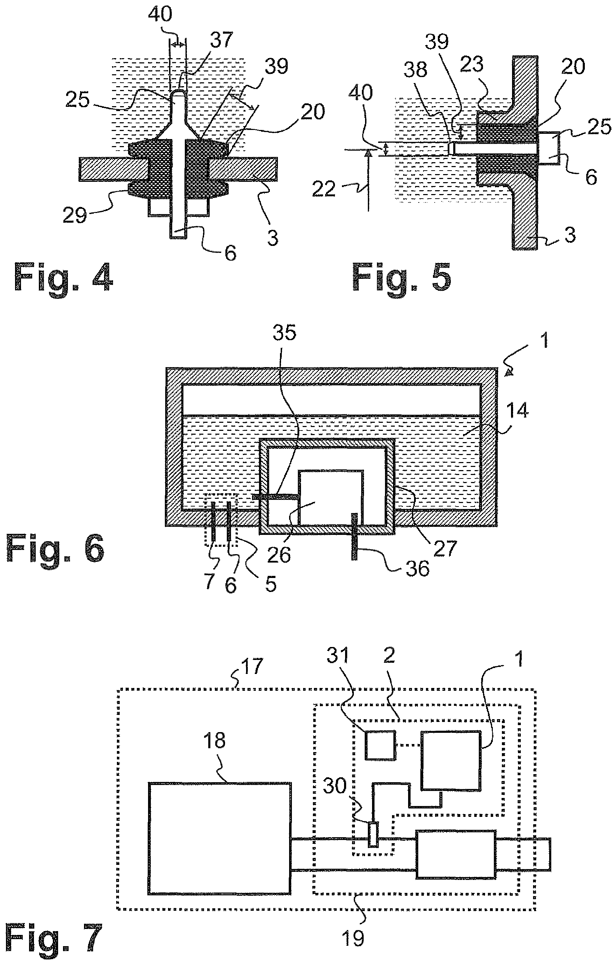

Fig. 4 zeigt ein weiteres Beispiel, wie ein elektrischer Kontakt eine Tankwand 3 durchdringen kann. Dabei ist der erste elektrische Kontakt 6 hier in Form einer Niet 25 ausgeführt, wobei die Niet 25 eine Gummimuffe 29 als Dichtung 20 mit der Tankwand 3 verspannt.

Fig. 5 zeigt einen in einen seitlichen Bereich einer Tankwand 3 (Tankseitenwand) eingesetzten ersten elektrischen Kontakt 6. Auch hier ist beispielhaft nur der erste elektrische Kontakt 6 dargestellt. Dieser erste elektrische Kontakt 6 ist ebenfalls als Niet 25 ausgeführt, der mit Hilfe einer Dichtung 20 in eine Einstülpung 23 der Tankwand 3 eingeführt ist. Eine Reservehöhe 22 wird hier durch die Anordnung des ersten elektrischen Kontakts 6 in der Tankwand 3 und nicht durch die Höhe eines Absatzes 21 definiert. Je weiter der erste elektrische Kontakt 6 bzw. die elektrischen Kontakte an der Tankwand 3 entfernt vom Tankboden positioniert sind, desto größer ist die Reservehöhe 22.

In den Fig. 4 und 5 sind zudem besonders bevorzugte Formen eines ersten elektrischen Kontakts 6 dargestellt. Diese Formen sind so gewählt, dass keine Ablagerungen und/oder Ansammlungen von Reduktionsmittel und/oder Reduktionsmittelrückständen im an dem ersten elektrischen Kontakt 6 auftreten können, bzw. dass derartige Ablagerungen und/oder Ansammlungen möglichst weitgehend vermieden werden. Derartige Ablagerungen können ein Kurzschluss zwischen dem ersten elektrischen Kontakt 6 und der Tankwand 3 und/oder ein Kurzschluss zwischen dem ersten elektrischen Kontakt 6 und dem zweiten elektrischen Kontakt 7 führen. Insbesondere das Ende des ersten elektrischen Kontaktes 6 kann hier entsprechend geeignet gestaltet werden. In Fig. 4 ist beispielsweise eine Linsenform 37 für das Ende des ersten elektrischen Kontaktes 6 dargestellt. Fig. 5 zeigt einen ersten elektrischen Kontakt 6, der an seinem Ende eine vorzugsweise umlaufende Fase 28 aufweist. Darüber hinaus kann die Dicke 40 des ersten elektrischen Kontakts 6 geeignet gewählt werden. Vorzugsweise beträgt die Dicke 40 zumindest 0,5 mm [Millimeter], vorzugsweise zumindest 1 mm und besonders bevorzugt zumindest 2 mm.

Zudem ist es für zur Vermeidung eines Kurzschlusses durch Ablagerungen und/oder Ansammlungen wichtig, dass die Isolierung des ersten elektrischen Kontakts 6 zu der Tankwand 3 bzw. zu einem zweiten elektrischen Kontakt 7 eine ausreichende Breite 40 aufweist. Mit einer Breite 40 ist bevorzugt ein kürzester Weg auf der Oberfläche der Isolierung von der Tankwand 3 zu dem ersten elektrischen Kontakt 6 gemeint. Die Isolierung wird gemäß den Fig. 4 und Fig. 5 von der Dichtung 20 gebildet. Vorzugsweise beträgt die Breite 39 zumindest 0,5 mm [Millimeter] und besonders bevorzugt zumindest 1 mm.

Diese für den ersten elektrischen Kontakt 6 vorgestellten besonderen Ausgestaltungen sind in analoger Weise auf einen zweiten elektrischen Kontakt 7 übertragbar, der jedoch in den Fig. 4 und Fig. 5 der Einfachheit halber nicht gesondert dargestellt ist.

Fig. 6 zeigt einen weiteren erfindungsgemäßen Tank 1 mit einem Sensor 5, der mit einem ersten elektrischen Kontakt 6 und einem zweiten elektrischen Kontakt 7 ausgeführt ist. Der Tank 1 weist einen metallischen Topf 27 auf, in dem eine Fördereinheit 26 zum Transport bzw. zur Dosierung des Reduktionsmittels angeordnet ist. Mittels der Fördereinheit 26 kann das flüssige Reduktionsmittel 14 über eine Entnahme 35 aus dem Innenraum des Tanks 1 heraus abgeführt werden. Teil der Fördereinheit 26 können z. B. ein Filter, eine Pumpe, ein Ventil, Transportleitungen, etc. sein, die mit in dem metallischen Topf 27 integriert sind. Ausgehend von dieser Fördereinheit 26 wird das flüssige Reduktionsmittel (ggf. unter erhöhtem Druck) über eine Ableitung 36 zum Beispiel einer (hier nicht gezeigten) Zugabestelle bzw. Zudosierstelle einer Abgasanlage zugeführt.

Fig. 7 zeigt ein Kraftfahrzeug 17 aufweisend eine Verbrennungskraftmaschine 18 sowie eine Abgasbehandlungsvorrichtung 19. In der Abgasbehandlungsvorrichtung 19 ist eine Dosiervorrichtung 2 vorgesehen, die einen Tank 1 aufweist. In dem Tank 1 gespeichertes flüssiges Reduktionsmittel kann mittels einer (bevorzugt im Tank integrierten) Fördereinheit der Abgasbehandlungsvorrichtung 19 über einen Injektor 30 mit vorgegebenen Mengen zudosiert werden.

Fig. 8 zeigt eine Ausführungsvariante eines ersten elektrischen Kontakts 6. Diese Ausführungsvariante ist auch auf einen zweiten elektrischen Kontakt übertragbar. Der erste elektrische Kontakt 6 ist als ein durch die Tankwand 3 hindurch geführter Niet 25 ausgeführt. Der Niet 25 erstreckt sich durch eine Öffnung 43 der Tankwand 3, wobei die Querschnittsfläche der Öffnung 43 kleiner ist als die Querschnittsfläche 44 des Niets 25, so dass sich ein Spalt zwischen dem Niet 25 und der Tankwand 3 ergibt. Vorzugsweise sind der Niet 25 und die Öffnung 43 rotationssymmetrisch ausgeführt. Die Breite des Spaltes bzw. die Größe der Öffnung 43 und die Querschnittsfläche 44 des Niets 25 sind vorzugsweise so gewählt, dass zwei O-Ringe 20 von dem Niet 25 und der Tankwand 3 jeweils sowohl in einer axialen Richtung 45 als auch in einer radialen Richtung 46 verspannt werden. Dies kann dadurch erreicht werden, dass die O-Ringe 20 von dem Niet 25 jeweils gegen eine Kante 47 der Öffnung 43 gespannt werden. So kann eine kostengünstige fluid-dichte Durchführung eines ersten elektrischen Kontaktes 6 und/oder eines zweiten elektrischen Kontaktes durch die Tankwand 3 hergestellt werden.

Fig. 9 zeigt eine sechste Ausführungsvariante eines ersten elektrischen Kontakts 6 und eines zweiten elektrischen Kontakts 7 für einen erfindungsgemäßen Tank 1 mit einem Sensor 5. In den Tank 1 ist ein metallischer Topf 27 eingesetzt. In diesem metallischen Topf 27 ist eine Fördereinheit 26 zur Förderung von Reduktionsmittel angeordnet. Der metallische Topf 27 bildet einen ersten elektrischen Kontakt 6 des Sensors 5. Zusätzlich ist ein zweiter elektrischer Kontakt 7 vorgesehen. Der zweite elektrische Kontakt 7 durchdringt bei dieser Ausführungsvariante den metallischen Topf 27, wobei er mit einem Dichtungselement gegenüber dem metallischen Topf 27 abgedichtet ist. Das Dichtungselement ist im vorliegenden Fall als Gummimuffe 29 ausgeführt. Es sind aber auch andere Ausführungsvarianten des Dichtungselementes einsetzbar. In einer abgewandelten Ausführungsvariante kann der zweite elektrische Kontakt 7 die Tankwand 3 auch getrennt von dem metallischen Topf 27 durchdringen. Beispielsweise kann der zweite elektrische Kontakt 7 neben dem metallischen Topf 27 in der Tankwand angeordnet sein. Der als metallischer Topf 27 ausgeführte erste elektrische Kontakt 6 und der zweite elektrische Kontakt 7 haben vorzugsweise einen ersten Abstand 9 von weniger als 5 cm [Zentimeter] zueinander.

Fig. 10 zeigt eine siebte Ausführungsvariante eines ersten elektrischen Kontakts 6 und eines zweiten elektrischen Kontakts 7 für einen erfindungsgemäßen Tank 1 mit einem Sensor 5. In den hier gezeigten Tank 1 ist ebenfalls ein metallischer Topf 27 mit einer Fördereinheit 26 eingesetzt. Auch hier bildet der metallische Topf 27 den ersten elektrischen Kontakt 6. Um den metallischen Topf 27 herum ist hier ein Filter 42 angeordnet. An dem metallischen Topf 27 ist eine Entnahme 35 für Reduktionsmittel angeordnet, durch welche Reduktionsmittel von dem Tank 1 zu der Fördereinheit 26 transportiert wird. Reduktionsmittel, welches aus dem Tank 1 zu der Entnahme 35 gelangt, wird durch den Filter 42 gefiltert. Der zweite elektrische Kontakt 7 ist neben dem metallischen Topf 27 mit dem Filter 42 angeordnet. Zwischen dem ersten elektrischen Kontakt 6 und dem zweiten elektrischen Kontakt 7 liegt auch hier ein Abstand von weniger als 5 cm vor. Der Filter 42 ist zwischen dem ersten elektrischen Kontakt 6 und dem zweiten elektrischen Kontakt 7 angeordnet. Dies ist allerdings für die Messung der elektrischen Eigenschaften des Reduktionsmittels zwischen dem ersten elektrischen Kontakt 6 und dem zweiten elektrischen Kontakt 7 nicht nachteilig.

Die in den Figuren 2 bis 5 und 8 dargestellten Ausführungsbeispiele für elektrische Kontakte sind nicht nur für elektrische Kontakte geeignet, die die Tankwand durchdringen. Diese Ausführungsbeispiele können auch auf elektrische Kontakte übertragen werden, die einen möglicherweise metallischen Topf in der Tankwand durchdringen, in dem eine Fördereinheit angeordnet sein kann. Eine derartige Anordnung eines elektrischen Kontaktes ist beispielsweise in Fig. 9 dargestellt.

Damit wurden hier ein Reduktionsmitteltank mit einem besonders vorteilhaften Füllstandssensor und ein besonders vorteilhaftes Verfahren zum Betrieb eines Reduktionsmitteltanks mit einer Füllstandsbestimmung angegeben.

### Bezugszeichenliste

- 1: Tank
- 2: Dosiervorrichtung
- 3: Tankwand
- 4: Innenraum
- 5: Sensor
- 6: erster elektrischer Kontakt
- 7: zweiter elektrischer Kontakt
- 8: Außenseite
- 9: erster Abstand
- 10: Tankboden
- 11: Heizung
- 12: zweiter Abstand
- 13: Temperatursensor
- 14: flüssiges Reduktionsmittel
- 15: gefrorenes Reduktionsmittel
- 16: Luft
- 17: Kraftfahrzeug
- 18: Verbrennungskraftmaschine
- 19: Abgasbehandlungsvorrichtung
- 20: Dichtung
- 21: Absatz
- 22: Reservehöhe
- 23: Einstülpung
- 24: Gewindebuchse
- 25: Niet
- 26: Fördereinheit
- 27: metallischer Topf
- 28: Schutzrahmen
- 29: Gummimuffe
- 30: Injektor
- 31: Steuerung
- 32: erste Länge
- 33: Eishöhle
- 34: Gewindehülse
- 35: Entnahme
- 36: Ableitung
- 37: Linsenform
- 38: Fase
- 39: Breite
- 40: Dicke
- 41: Gegenhalter
- 42: Filter
- 43: Öffnung
- 44: Querschnitt
- 45: axiale Richtung
- 46: radiale Richtung
- 47: Kante

## Patentansprüche

1. Tank (1) für ein Reduktionsmittel aufweisend eine Tankwand (3) und einen von der Tankwand (3) zumindest teilweise begrenzten Innenraum (4), wobei an der Tankwand (3) ein Sensor (5) mit einem ersten elektrischen Kontakt (6) und einem zweiten elektrischen Kontakt (7) angeordnet ist, wobei der erste elektrische Kontakt (6) und der zweite elektrische Kontakt (7) mit dem Innenraum (4) in elektrisch leitfähiger Verbindung stehen, die Tankwand (3) von dem Innenraum (4) zu einer Außenseite (8) der Tankwand (3) durchdringen und in einem ersten Abstand (9) von weniger als 5 cm zueinander angeordnet sind.

2. Tank (1) nach dem vorhergehenden Patentanspruch, wobei zumindest der erste elektrische Kontakt (6) oder der zweite elektrische Kontakt (7) von einem metallischen Topf (27) gebildet ist, welcher in dem Tank (1) angeordnet ist.

3. Tank (1) nach Patentanspruch 2, wobei ein elektrischer Kontakt von einem metallischen Topf (27) gebildet ist und der andere elektrische Kontakt den metallischen Topf (27) durchdringt.

4. Tank (1) nach Patentanspruch 2, wobei ein elektrischer Kontakt von einem metallischen Topf (27) gebildet ist, der metallische Topf (27) von einem Filter (42) umgeben ist und der andere elektrische Kontakt außerhalb des Filters (42) angeordnet ist.

5. Tank (1) nach einem der vorhergehenden Patentansprüche, wobei der Sensor (5) an einem Tankboden (10) angeordnet ist.

6. Tank (1) nach Patentanspruch 5, wobei zumindest der erste elektrischen Kontakt oder der zweite elektrische Kontakt mit einer Länge von maximal 5 cm aus dem Tankboden in den Tankinnenraum hineinragen.

7. Tank (1) nach einem der vorhergehenden Patentansprüche, wobei der Tank (1) eine Heizung (11) aufweist, und die Heizung (11) in einem zweiten Abstand (12) von weniger als 50 cm zum Sensor (5) angeordnet ist.

8. Tank (1) nach einem der vorhergehenden Patentansprüche, wobei zumindest an einem elektrischen Kontakt (6, 7) an der Außenseite (8) der Tankwand (3) ein Temperatursensor (13) angebracht ist.

9. Tank (1) nach einem der vorhergehenden Patentansprüche, wobei an einer Außenseite (8) der Tankwand (3) ein angespritzter oder abgegossener Schutzrahmen (28) angebracht ist, durch welchen der erste elektrische Kontakt (6) und der zweite elektrische Kontakt (7) geschützt sind.

10. Kraftfahrzeug (17) aufweisend eine Verbrennungskraftmaschine (18) mit einer Abgasbehandlungsvorrichtung (19) die eine Dosiervorrichtung (2) für Reduktionsmittel aufweist, wobei die Dosiervorrichtung (2) einen Tank (1) nach einem der vorhergehenden Patentansprüche aufweist.

## Claims

1. Tank (1) for a reducing agent, having a tank wall (3) and having an interior (4) which is at least partially delimited by the tank wall (3), wherein on the tank wall (3) there is arranged a sensor (5) with a first electrical contact (6) and a second electrical contact (7), wherein the first electrical contact (6) and the second electrical contact (7) are connected in an electrically conductive manner to the interior (4), extend through the tank wall (3) from the interior (4) to an outer side (8) of the tank wall (3), and are arranged with a first spacing (9) of less than 5 cm to one another.

2. Tank (1) according to the preceding patent claim, wherein at least the first electrical contact (6) or the second electrical contact (7) is formed by a metallic pot (27) which is arranged in the tank (1).

3. Tank (1) according to Patent Claim 2, wherein one electrical contact is formed by a metallic pot (27) and the other electrical contact extends through the metallic pot (27).

4. Tank (1) according to Patent Claim 2, wherein one electrical contact is formed by a metallic pot (27), the metallic pot (27) is surrounded by a filter (42), and the other electrical contact is arranged outside the filter (42).

5. Tank (1) according to one of the preceding patent claims, wherein the sensor (5) is arranged on a tank base (10).

6. Tank (1) according to Patent Claim 5, wherein at least the first electrical contact or the second electrical contact project from the tank base into the tank interior with a length of at most 5 cm.

7. Tank (1) according to one of the preceding claims, wherein the tank (1) has a heater (11) and the heater (11) is arranged with a second spacing (12) of less than 50 cm to the sensor (5).

8. Tank (1) according to one of the preceding patent claims, wherein a temperature sensor (13) is attached at least to one electrical contact (6, 7) on the outer side (8) of the tank wall (3).

9. Tank (1) according to one of the preceding patent claims, wherein to an outer side (8) of the tank wall (3) there is attached an integrally injection molded or integrally cast protective frame (28) by means of which the first electrical contact (6) and the second electrical contact (7) are protected.

10. Motor vehicle (17) having an internal combustion engine (18) with an exhaust-gas treatment device (19) which has a dosing device (2) for reducing agent, wherein the dosing device (2) has a tank (1) according to one of the preceding patent claims.

## Revendications

1. Réservoir (1) pour un agent de réduction, présentant une paroi de réservoir (3) et un compartiment intérieur (4) au moins partiellement limité par la paroi de réservoir (3), un capteur (5) avec un premier contact électrique (6) et un deuxième contact électrique (7) étant disposé sur la paroi de réservoir (3), le premier contact électrique (6) et le deuxième contact électrique (7) étant en liaison électriquement conductrice avec le compartiment intérieur (4), traversant la paroi de réservoir (3) à partir du compartiment intérieur (4) vers un côté extérieur (8) de la paroi de réservoir (3) et étant disposés à une première distance (9) l'un de l'autre qui est inférieure à 5 cm.

2. Réservoir (1) selon la revendication précédente, au moins le premier contact électrique (6) ou le deuxième contact électrique (7) étant formé d'un pot métallique (27) qui est disposé dans le réservoir (1).

3. Réservoir (1) selon la revendication 2, un contact électrique étant formé d'un pot métallique (27) et l'autre contact électrique traversant le pot métallique (27).

4. Réservoir (1) selon la revendication 2, un contact électrique étant formé d'un pot métallique (27), le pot métallique (27) étant entouré d'un filtre (42) et l'autre contact électrique étant disposé à l'extérieur du filtre (42).

5. Réservoir (1) selon l'une des revendications précédentes, le capteur (5) étant disposé sur un fond inférieur de réservoir (10).

6. Réservoir (1) selon la revendication 5, au moins le premier contact électrique ou le deuxième contact électrique dépassant sur une première longueur de 5 cm maximum dans le compartiment intérieur de réservoir à partir du fond inférieur de réservoir.

7. Réservoir (1) selon l'une des revendications précédentes, le réservoir (1) présentant un chauffage (11), et le chauffage (11) étant disposé à une deuxième distance (12) du capteur (5) qui est inférieure à 50 cm.

8. Réservoir (1) selon l'une des revendications précédentes, un capteur de température (13) étant disposé au moins sur un contact électrique (6, 7) sur le côté extérieur (8) de la paroi de réservoir (3).

9. Réservoir (1) selon l'une des revendications précédentes, un cadre de protection (28) projeté ou coulé étant mis en place sur un côté extérieur (8) de la paroi de réservoir (3) et permettant de protéger le premier contact électrique (6) et le deuxième contact électrique (7).

10. Véhicule (17), présentant un moteur à combustion interne (18) avec un dispositif de traitement des gaz d'échappement (19) qui présente un dispositif de dosage (2) pour des agents de réduction, le dispositif de dosage (2) présentant un réservoir (1) selon l'une des revendications précédentes.
